# EUROPÄISCHE PATENTSCHRIFT

(11) **EP 1 839 915 B1**
(45) Veröffentlichungstag und Bekanntmachung des Hinweises auf die Patenterteilung: **27.05.2009**
(21) Anmeldenummer: 07450026.5
(22) Anmeldetag: 14.02.2007
(51) Int. Cl.: B60C 27/10

(54) **Spannvorrichtung für eine Gleitschutzkette**
Tension device for an anti-skid chain
Dispositif de serrage pour une chaîne antidérapante

(30) Priorität: 29.03.2006 AT 5382006
(43) Veröffentlichungstag der Anmeldung: 03.10.2007
(73) Patentinhaber: Pewag Schneeketten GMBH & Co KG, 8020 Graz (AT)
(72) Erfinder: Pengg, Ägyd, 9020 Klagenfurt (AT)
(74) Vertreter: Matschnig, Franz

(56) Entgegenhaltungen:
- WO-A-20/05095129
- AT-B- 408 635
- DE-A1- 19 708 756
- DE-B3-2102004 037 33

## Beschreibung

Die Erfindung betrifft eine Spannvorrichtung für eine Gleitschutzkette mit einem Gehäuse und einem Betätigungsglied, das zumindest zwei Blockierpositionen für einen durch eine Gehäuseöffnung in das Gehäuse einziehbaren Spannstrang aufweist, der innerhalb des Gehäuses an eine in Aufwickelrichtung vorgespannte und um ihre Achse drehbar gelagerte Wickelrolle angeschlossen ist; dabei ist in einer ersten Blockierposition der Spannstrang gegen Bewegung in seiner Spannrichtung blockierbar und in einer zweiten Blockierposition gegen Bewegung entgegen seiner Spannrichtung, und an der Wickelrolle ist ein Zahnkranz mit einer ihm zugeordneten Sperrklinke vorgesehen.

Spannvorrichtungen werden bei Gleitschutzketten, insbesondere Schneeketten, verwendet, um nach der Montage ein unerwünschtes Rücklaufen des Spannstranges entgegen der Spannrichtung zu vermeiden. Der Spannstrang ist zumeist ein Spannseil, kann jedoch auch z.B. als Spannkette ausgebildet sein.

Die AT 408 635 B beschreibt eine gattungsgemäße Spannvorrichtung mit einem Betätigungsglied mit ebenfalls drei Stellungen. Zwei miteinander drehfest verbundene Klinkenräder sind jeweils Sperrklinken zugeordnet und weisen gegenläufige Sperrrichtungen auf. Das Betätigungsglied wirkt auf die zwei Sperrklinken, wobei in einer ersten Raststellung die eine Sperrklinke in das ihr zugeordnete Klinkenrad eingreift, während in einer zweiten Raststellung die andere Sperrklinke in das ihr zugeordnete Klinkenrad eingreift, sodass die Bewegung in bzw. gegen die Spannrichtung freigegeben und in bzw. gegen die Gegenrichtung blockiert ist; in einer dritten Stellung, einer dazwischen einstellbaren Freigabestellung, greift keine der Sperrklinken ein und die Blockierung ist aufgehoben. Diese Vorrichtung ist durch das doppelte Klinkenrad aufwändig und stellt hohe Anforderungen an die Präzision der Ausführung; außerdem ist die Bedienung durch die drei Stellungsmöglichkeiten kompliziert.

Die AT 006 475 U1 beschreibt eine Spannvorrichtung mit einem Klinkenrad und einer ihm zugeordneten, mittels eines Betätigungsgliedes betätigbaren Sperrklinke, wobei das Betätigungsglied bezüglich des Gehäuses verschiebbar ist und drei Stellungen aufweist, allerdings neben einer Blockierstellung, in der der Spannstrang bzw. das Klinkenrad vollständig blockiert ist, eine Haltestellung, in der das Klinkenrad in Aufwickelrichtung des Spannstranges drehbar ist, und eine Freigabestellung, worin die Blockierung gänzlich aufgehoben ist. Eine abwechselnde Blockierung einmal für die eine, einmal für die andere Richtung kann diese Vorrichtung somit nicht leisten.

Es ist Aufgabe der Erfindung, die genannten Nachteile zu überwinden und eine Spannvorrichtung mit zwei Sperrstellungen zu schaffen, bei denen jeweils die Bewegung des Spannstranges in eine Richtung zugelassen und die andere Richtung blockiert ist.

Diese Aufgabe wird von einer Spannvorrichtung der eingangs beschriebenen Art gelöst, bei welcher erfindungsgemäß die Sperrklinke mittels des Betätigungsgliedes zwischen zwei den Blockierpositionen entsprechende Endstellungen bewegbar ist und die Sperrklinke in jeder Endstellung mit jeweils zumindest einer Auflauffläche in denselben Zahnkranz eingreift, wobei die zumindest eine Auflauffläche zumindest eine Zahnflanke des Zahnkranzes abstützt (nämlich, als Auflagefläche wirkt) und die Bewegung des Zahnkranzes in dieser Zahnflankenrichtung hemmt, wobei verschiedenen Endstellungen zugeordnete Auflaufflächen jeweils mit Zahnflanken verschiedener Orientierung (nämlich in bzw. gegen die Aufwickelrichtung) zusammenwirken.

Durch diese Lösung gelingt die Realisierung zweier entgegen gesetzt gerichteter Blockierungen auf einfache und doch effiziente Weise. Im Gegensatz zu herkömmlichen Vorrichtungen ermöglicht die Erfindung die Verwendung eines einzelnen Klinkenelements, das mit zwei an verschiedenen Stellen angeordneten Auflaufflächen in denselben Zahnkranz einwirkt, und somit die Anzahl der Komponenten deutlich reduziert.

In einer bevorzugten Ausführungsform, die eine besonders kompakte Bauweise der Sperrklinke gestattet, hemmt die Sperrklinke die Bewegung des Zahnkranzes in Richtung der der Sperrklinke zugewandten Zahnflanken.

Es ist weiters günstig im Sinne einer verbesserten Betriebssicherheit, wenn das Betätigungsglied als mit der Sperrklinke drehfest verbundener Hebel ausgebildet ist.

Die Sperrklinke kann günstiger Weise federbelastet sein. Für die Federbelastung der Sperrklinke kann vorteilhafter Weise ein Federelement sorgen, das an einer Seite der Sperrklinke - z.B. dem Zahnkranz abgewandt oder stirnseitig - angeordnet ist und federnd auf die Sperrklinke drückt, wobei in der Sperrklinke Ausnehmungen vorgesehen sind, die jeweils einer Endstellung entsprechen, und das Federelement in jeder Endstellung die Sperrklinke federnd fixiert.

Es vereinfacht den Aufbau der Spannvorrichtung zusätzlich, wenn sich die beiden Blockierrichtungen zueinander symmetrisch verhalten, somit die Auflaufflächen der Sperrklinke zueinander spiegelsymmetrisch sind und der Zahnkranz zueinander spiegelsymmetrische Zahnflanken aufweist.

Günstiger Weise ist die Steilheit der Zahnflanken so gewählt, dass bei Aufliegen einer Zahnflanken auf einer zugeordneten Auflauffläche Selbsthemmung der Radbewegung in Richtung der Zahnflankenorientierung eintritt.

Die Erfindung samt ihren Vorzügen und vorteilhaften Ausgestaltungen wird im Folgenden anhand eines nicht einschränkenden Ausführungsbeispiels näher erläutert, das in den beigefügten Zeichnungen dargestellt ist. Die Figuren zeigen
- Fig. 1: eine erfindungsgemäße Spannvorrichtung in erster Blockierstellung in Seitenansicht,
- Fig. 2: die geöffnete Spannvorrichtung,
- Fig. 3: die geöffnete Spannvorrichtung in zweiter Blockierstellung,
- Fig. 4: die Spannvorrichtung in explodierter Darstellung, und
- Fig. 5: die Arretierung der Klinke in den Endpositionen anhand einer Detailansicht auf den Schnitt längs der Linie V-V in Fig. 2.

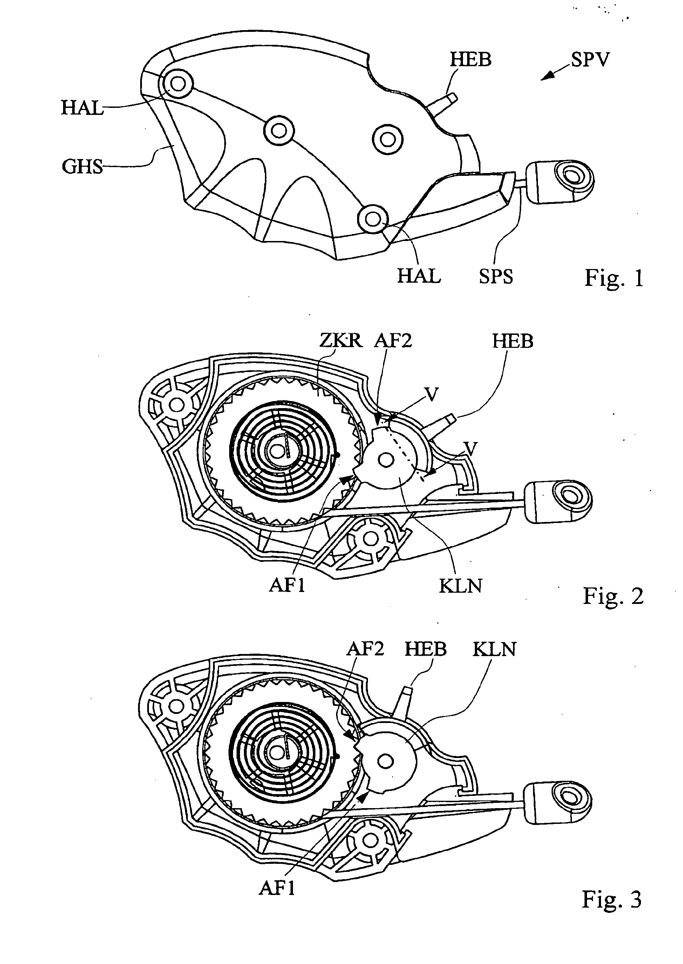

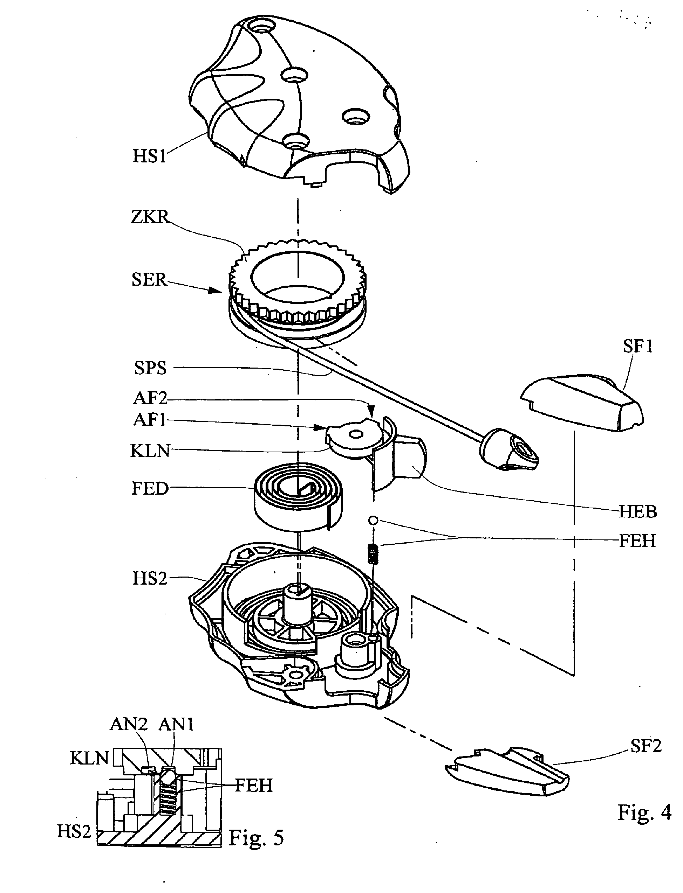

Gemäß Fig.1 weist eine erfindungsgemäße Spannvorrichtung SPV ein Gehäuse GHS (bestehend aus zwei Gehäuseschalen HS1,HS2, ergänzt durch zwei Hälften einer Seilführung SF1,SF2 - vgl. Fig. 4) auf, an dem mittels Haltevorrichtungen HAL z.B. in Form von Ösen oder Bohrungen (nicht gezeigte) Stifte und/oder Haken mit daran einhängbaren Ketten/Seilen befestigt werden können. Ein Spannseil SPS, das zum Spannen einer Gleitschutzkette oder Schneekette verwendet werden kann, ist im Inneren der Spannvorrichtung SPV aufgerollt; mittels eines oben aus einer Öffnung des Gehäuses ausgeführten, Hebels HEB, der Teil des Betätigungsglieds im Sinne der Erfindung ist, kann je nach Bedarf festgelegt werden, in welche gewünschte Richtung das Spannseil freigegeben ist, während zugleich eine Bewegung in die entgegen gesetzte Richtung blockiert ist. In Fig.1 ist beispielhaft jene Stellung gezeigt, in der das Spannseil SPS eingezogen werden kann, während ein Herausziehen des Seiles blockiert ist.

Der innere Aufbau geht aus Fig. 2 und 3 sowie der explodierten Darstellung der Fig.4 hervor. Zum Aufwickeln des Spannseiles SPS ist eine Seilrolle SER mit einer drehfest verbundenen Zahnkranz ZKR vorgesehen; zu diesem Zweck ist die Seilrolle SER mit einer Feder FED in Aufwickelrichtung vorgespannt.

Zum Blockieren des Spannseiles SPS in eine Richtung und Freigabe in die entsprechende Gegenrichtung weist die Seilrolle SER einen mit ihr drehfest verbundenen Zahnkranz ZKR auf. Gemäß der Erfindung werden beide Flanken der Zähne des Zahnkranzes ZKR zum wahlweisen Hemmen der Seilbewegung genützt. Dazu können die Zähne wie in der gezeigten Ausführungsform symmetrisch sein, was die Konstruktion zusätzlich vereinfacht. Eine neben dem Zahnkranz angeordnete Klinke KLN weist zwei Endpositionen (Fig.2 bzw. Fig. 3) auf, die jeweils einer Blockierposition entsprechen und mit dem Hebel HEB einstellbar sind. In jeder Endposition greift die Klinke jeweils in den Zahnkranz ein und wirkt mit den Zahnflanken eines Typs (nämlich in Fig. 2 mit den gegen den Uhrzeigersinn orientierten Flanken, in Fig. 3 jenen im Uhrzeigersinn) über eine entsprechende Auflauffläche AF1,AF2 an der Außenseite der Klinke zusammen. Mithilfe der Klinke KLN wird die Richtung festgelegt, in welche die Seilrolle bewegbar ist, während sie in der Gegenrichtung sperrt. Wie bereits erwähnt, erfolgt die Betätigung der Klinke KLN über den Hebel HEB des mit ihr einstückigen bzw. drehfest verbundenen Betätigungsglieds.

Bei der Bewegung des Spannseiles in der zugelassenen Richtung hebt der Zahnkranz ZKR bei jeder Zahnposition jeweils die eingreifende Auflauffläche der Klinke KLN ein wenig an, die sogleich beim Überschreiten des Zahnkopfes durch die Federkraft des nachfolgend erläuterten Halteelements FEH in den nächsten Zahnraum zurückspringt. In der Gegenrichtung ist die Bewegung dagegen selbsthemmend blockiert, weil der Zahnkranz mit der Auflaufflanke auf der Gegenfläche der Klinke abstützt und so die Bewegung hemmt.

Ein federndes Halteelement FEH dient dazu, die Klinke KLN in der jeweiligen Endstellung zu arretieren und zugleich das nötige Spiel für die Bewegung des Zahnkranzes in die zugelassene Richtung zu gewähren. Beispielsweise ist als Halteelement eine Kugel vorgesehen, die in dem Schalenteil HS2 federnd gelagert ist und mittels einer Feder gegen die Unterseite der Klinke gedrückt wird - vgl. Fig. 5, die ein Detail mit dem Halteelement in einer Schnittansicht entlang des Schnittes längs der Linie V-V in Fig. 2 zeigt. Die Kugel rastet, je nach Endstellung, in eine von zwei Ausnehmungen (Vertiefungen) AN1,AN2 in der unteren Fläche der Klinke KLN ein. Wenn die Klinke durch Betätigung des Hebels HEB umgeschaltet wird, wird die Kugel gegen die Federkraft aus der einen Ausnehmung bewegt; beim Erreichen der anderen Ausnehmung federt die Kugel in diese wieder zurück und fixiert so Klinke und Hebel in der jeweiligen Endposition.

## Patentansprüche

1. Spannvorrichtung (SPV) für eine Gleitschutzkette mit einem Gehäuse (HS1,HS2) und einem Betätigungsglied (HEB), das zumindest zwei Blockierpositionen für einen durch eine Gehäuseöffnung in das Gehäuse einziehbaren Spannstrang (SPS) aufweist, der innerhalb des Gehäuses an eine in Aufwickelrichtung vorgespannte und um ihre Achse drehbar gelagerte Wickelrolle (SER) angeschlossen ist, wobei in einer ersten Blockierposition der Spannstrang gegen Bewegung in seiner Spannrichtung blockierbar ist und in einer zweiten Blockierposition gegen Bewegung entgegen seiner Spannrichtung, wobei an der Wickelrolle ein Zahnkranz (ZKR) mit einer ihm zugeordneten Sperrklinke (KLN) vorgesehen ist,
**dadurch gekennzeichnet, dass**
die Sperrklinke (KLN) mittels des Betätigungsgliedes (HEB) zwischen zwei den Blockierpositionen entsprechende Endstellungen bewegbar ist und die Sperrklinke in jeder Endstellung mit jeweils zumindest einer Auflauffläche (AF1,AF2) in den Zahnkranz eingreift, wobei die zumindest eine Auflauffläche zumindest eine Zahnflanke des Zahnkranzes abstützt und die Bewegung des Zahnkranzes in dieser Zahnflankenrichtung hemmt, wobei verschiedenen Endstellungen zugeordnete Auflaufflächen jeweils mit Zahnflanken verschiedener Orientierung zusammenwirken.

2. Spannvorrichtung nach Anspruch 1, **dadurch gekennzeichnet, dass** die Sperrklinke (KLN) die Bewegung des Zahnkranzes (ZKR) in Richtung der der Sperrklinke zugewandten Zahnflanken hemmt.

3. Spannvorrichtung nach Anspruch 1 oder 2, **dadurch gekennzeichnet, dass** die Auflaufflächen der Sperrklinke (KLN) zueinander spiegelsymmetrisch sind und der Zahnkranz (ZKR) zueinander spiegelsymmetrische Zahnflanken aufweist.

4. Spannvorrichtung nach einem der Ansprüche 1 bis 3, **gekennzeichnet durch** ein Halteelement (FEH), das an einer Seite der Sperrklinke (KLN) angeordnet ist und federnd auf die Sperrklinke drückt, wobei in der Sperrklinke Ausnehmungen (AN1,AN2) vorgesehen sind, die jeweils einer Endstellung entsprechen, und das Federelement in jeder Endstellung die Sperrklinke federnd fixiert.

5. Spannvorrichtung nach einem der Ansprüche 1 bis 4, **dadurch gekennzeichnet, dass** das Betätigungsglied (HEB) als mit der Sperrklinke drehfest verbundener Hebel ausgebildet ist.

6. Spannvorrichtung nach einem der Ansprüche 1 bis 5 **dadurch gekennzeichnet, dass** die Steilheit der Zahnflanken so gewählt ist, dass bei Aufliegen einer Zahnflanken auf einer zugeordneten Auflauffläche Selbsthemmung eintritt.

## Claims

1. A tensioning device (SPV) for a non-skid chain having a housing (HS1, HS2) and an actuating member (HEB), which has at least two locking positions for a tension cord (SPS) that can be drawn into the housing through an opening in the housing, which tension cord (SPS) is fixed, within the housing, to a winding pulley (SER) biased in the winding direction and mounted for rotation about its axis, said tension cord (SPS) being capable of being locked, in a first locked position, against movement in its tensioning direction and, in a second locked position, against movement contrary to its tensioning direction, and said winding pulley (SER) is provided with a gear ring (ZKR) having a locking pawl (KLN) assigned thereto,
**characterized in that**
said locking pawl (KLN) can be moved by means of said actuating member (HEB) between two end positions corresponding to the locking positions, and said locking pawl engages, in each end position, respectively, with at least one stop face in the same gear ring, and said at least one stop face (AF1, AF2) bears against at least one tooth flank of the gear ring (ZKR) and prevents movement of the gear ring in the direction of this tooth flank, and stop faces assigned to the different end positions each cooperate with tooth flanks showing different orientations.

2. The tensioning device as defined in claim 1, **characterized in that** said locking pawl (KLN) blocks movement of the gear ring (ZKR) in the direction of the tooth flanks facing said locking pawl (KLN).

3. The tensioning device as defined in claim 1 or claim 2, **characterized in that** said stop faces of said locking pawl (KLN) bear a mirror-symmetrical relationship to each other and said gear ring (ZKR) has mirror-symmetrical tooth flanks.

4. The tensioning device as defined in any one of claims 1 to 3, **characterized by** a retaining element (FEH), which is provided on one side of said locking pawl (KLN) and resiliently presses against said locking pawl, recesses being formed in said locking pawl to correspond to each of said end positions, and said resilient element resiliently fixes the position of said locking pawl in each end position.

5. The tensioning device as defined in any one of claims 1 to 4, **characterized in that** said actuating member (HEB) is configured as a lever that is non-rotatably connected to said locking pawl.

6. The tensioning device as defined in any one of claims 1 to 5, **characterized in that** the steepness of the tooth flanks is such that when a tooth flank bears against an assigned stop face, self-locking occurs.

## Revendications

1. Dispositif de serrage (SPV) pour une chaîne antidérapante avec un boîtier (HS1, HS2) et un organe d'actionnement (HEB) qui présente au moins deux positions de blocage pour une barre de serrage (SPS) pouvant être intégrée par une ouverture dans le boîtier, qui est raccordée dans le boîtier à une bobine (SER) logée à rotation autour de son axe et précontrainte dans le sens d'enroulement, la barre de serrage pouvant être bloquée dans une première position de blocage contre tout déplacement dans son sens de serrage et dans une seconde position de blocage contre tout mouvement dans son sens inverse de serrage, une couronne dentée (ZKR) avec un cliquet d'arrêt (KLN) associé à celle-ci étant prévue sur la bobine,
**caractérisé en ce que**
le cliquet d'arrêt (KLN) peut être déplacé au moyen de l'organe d'actionnement (HEB) entre deux positions finales correspondant aux positions de blocage et le cliquet d'arrêt s'engage dans chaque position finale avec respectivement au moins une surface d'attaque (AF1, AF2) dans la couronne dentée, l'au moins une surface d'attaque s'appuyant sur au moins un flanc denté de la couronne dentée et bloquant le mouvement de la couronne dentée dans ce sens de flanc denté, des surfaces d'attaque associées à différentes positions finales coopérant respectivement avec des flancs dentés de différente orientation.

2. Dispositif de serrage selon la revendication 1, **caractérisé en ce que** le cliquet d'arrêt (KLN) bloque le mouvement de la couronne dentée (ZKR) en direction des flancs dentés tournés vers le cliquet d'arrêt.

3. Dispositif de serrage selon la revendication 1 ou 2, **caractérisé en ce que** les surfaces d'attaque du cliquet d'arrêt (KLN) sont symétriques l'une à l'autre et la couronne dentée (ZKR) présente des flancs dentés symétriques les uns aux autres.

4. Dispositif de serrage selon l'une quelconque des revendications 1 à 3, **caractérisé par** un élément de retenue (FEH) qui est disposé sur un côté du cliquet d'arrêt (KLN) et presse de manière élastique le cliquet d'arrêt, des évidements (AN1, AN2) étant prévus dans le cliquet d'arrêt, lesquels correspondent respectivement à une position finale et l'élément de ressort fixe de manière élastique dans chaque position finale le cliquet d'arrêt.

5. Dispositif de serrage selon l'une quelconque des revendications 1 à 4, **caractérisé en ce que** l'organe d'actionnement (HEB) est réalisé comme un levier relié à rotation au cliquet d'arrêt.

6. Dispositif de serrage selon l'une quelconque des revendications 1 à 5, **caractérisé en ce que** la pente des flancs dentés est choisie de sorte que l'autoblocage apparaisse lors du repos d'un flanc denté sur une surface d'attaque associée.
